# EUROPÄISCHE PATENTSCHRIFT

(11) **EP 3 374 739 B1**
(45) Veröffentlichungstag und Bekanntmachung des Hinweises auf die Patenterteilung: **25.12.2019**
(21) Anmeldenummer: 16797519.2
(22) Anmeldetag: 15.11.2016
(51) Int. Cl.: G01C 21/34, G08G 1/01

(54) **VERFAHREN UND VORRICHTUNG ZUR BEREITSTELLUNG VON AUFGEZEICHNETEN, ANONYMISIERTEN ROUTEN**
METHOD AND APPARATUS FOR THE PROVISION OF RECORDED, ANONYMISED ROUTES
PROCÉCÉ ET DISPOSITIF POUR LA MISE A DISPOSITION DE ROUTES ENREGISTRÉES ANONYMISÉES

(30) Priorität: 21.01.2016 DE 102016200855
(43) Veröffentlichungstag der Anmeldung: 19.09.2018
(73) Patentinhaber: Siemens Mobility GmbH, 81739 München (DE)
(72) Erfinder: BUSSER, Jens-Uwe, 85579 Neubiberg (DE)
(86) Internationale Anmeldenummer: PCT/EP2016/077663
(87) Internationale Veröffentlichungsnummer: WO 2017/125180

(56) Entgegenhaltungen:
- US-A1- 2013 006 517
- US-A1- 2015 308 848

## Beschreibung

Die Erfindung betrifft ein Verfahren und eine Vorrichtung zur Bereitstellung von aufgezeichneten, anonymisierten Routen, wobei eine Route eine Reihe von Positionsangaben für Wegpunkte beinhaltet, und durch Entfernen von Objekt-identifizierenden Daten anonymisiert ist.

Die räumliche Bewegung eines Objekts von einem Startpunkt über aufeinanderfolgende Wegpunkte zu einem Zielpunkt wird als Route bezeichnet. Einem Objekt ist dabei üblicherweise ein Nutzer, beispielsweise eine natürliche Person zugeordnet. Zur Verfolgung der räumlichen Bewegung eines Objekts bzw. einer Person, auch Geo-Tracking genannt, gibt es mittlerweile eine Vielzahl von Datenquellen. Solche Routen werden beispielsweise mittels GPS-Ortung eines Smartphones, eines Tablets, eines Laptops oder eines Navigationssystems eines Benutzers bzw. Fahrzeugs aufgenommen. Weitere Datenquellen sind eine Funkzellenortung eines Mobilfunktelefons durch einen Mobilfunknetzbetreiber oder ein Kontakt zu WLAN- oder Bluetooth-Zugangspunkten. Ebenso können bei der Nutzung von elektronischen Zahlungssystemen und Bankautomaten mittels einer Kredit- oder Kundenkarte, eine Positionsangabe beziehungsweise einen Aufenthaltspunkt, eines Objekts erfasst werden. Auch elektronische Tickets oder RFID-Karten können bei ihrer Verwendung in öffentlichen Verkehrsmitteln oder beim Einkauf zur Ermittlung einer Route verwendet werden.

Positionsangaben werden bei GPS-Daten durch eine geografische Länge- und Breitenangabe und eventuell Höhenangaben beschrieben. Dabei sind unterschiedliche Formate wie beispielsweise ein GPS-Austauschformat, ein Geography Markup Language GML-Format oder auch ein Keyhole Markup Language KML-Format gebräuchlich. Neben den Positionsangaben werden zu einer Route oder auch zu einzelnen Wegpunkten Zeitangaben beziehungsweise Zeitstempel registriert. Zu einer Route werden üblicherweise auch Daten des Objekts selbst beziehungsweise des Nutzers des georteten Objekts gespeichert. Dies sind beispielsweise ein Autokennzeichen eines Fahrzeugs, eine Telefonnummer, eine IP-Adresse eines Mobilfunkgerätes oder auch Kartennummern oder Stammdaten einer Kreditkarte.

Die aufgezeichneten Routen können sehr nützlich sein zur Erbringung innovativer Dienstleistungen wie beispielsweise Staumeldungen, Verspätungen im Bahnverkehr oder Hinweise zu nahegelegenen Verpflegungsmöglichkeiten oder auch zur Feststellung und Vorhersage einer Auslastung von Verkehrsmitteln, zur Staufrüherkennung und Stauvermeidung.

Diese Informationen über zurückgelegte Wegstrecken eines betrachteten Objekts (Fahrzeug, Smartphone, etc.) ermöglichen aber auch Aussagen zum Verhalten der zugeordneten Person, sowie ihrer persönlichen Vorlieben und Eigenschaften. Daher werden diese Daten gemäß Datenschutzrecht als personenbezogene oder personenbeziehbare und damit eventuell sogar als besonders schützenswerte Daten eingestuft. Personenbezogene oder personenbeziehbare Daten dürfen in manchen Ländern nur aufgrund einer dedizierten gesetzlichen Grundlage oder einer qualifizierten Einverständniserklärung der Betroffenen erfasst, verarbeitet oder gespeichert werden. Werden diese Daten aber mit Einverständnis der Betroffenen erfolgreich anonymisiert, so dass kein Bezug zu Personen mehr herstellbar ist, so gelten diese Daten nicht mehr als personenbezogen oder personenbeziehbar, und die Einschränkungen aus dem Datenschutzrecht entfallen für weitere Verwendungen der Daten.

Bei einer Anonymisierung werden üblicherweise zumindest allgemein bekannte, Personen identifizierende Daten sowie Pseudonyme, wie beispielsweise IP-Adresse oder Gerätekennzeichen, entfernt. Teilweise lassen sich bereits aus einem Start- oder Endpunkt einer Route weitreichende Informationen über die Person ziehen und somit die Zahl möglicher für diese Route in Frage kommender Personen sehr stark einschränken. Somit ist eine so genannte De-Anonymisierung der Route trotz Entfernen von Personen- beziehungsweise Objekt-identifizierenden Daten möglich. Eine Verwendung solcher Routendaten würde daher weiterhin das Einholen einer qualifizierten Einverständniserklärung aller Betroffenen für jeden neuen Verwendungszweck erfordern, was aber üblicherweise mit vertretbarem Aufwand nicht durchführbar ist. Eine Vielzahl aufgezeichneter Routen wären somit von einer Weiterverarbeitung ausgeschlossen.

Die DE 10 2011 106 295 A1 offenbart ein Verfahren zum bidirektionalen Übertragen von Informationsdaten zwischen Kraftfahrzeugen und einem Dienstanbieter. Vor dem Übertragen der Informationsdaten an den Dienstanbieter ist ein Anonymisieren der Informationsdaten mittels einer Backend-Servervorrichtung vorgesehen. Dabei werden Wegpunkte innerhalb einer bestimmten Zeit oder Entfernung von den Start- und Zielpunkten einer Fahrt eines jeweiligen Fahrzeugs nicht an den Dienstanbieter weitergegeben, um diese als einem Kraftfahrzeug zuordenbare Orte zu schützen.

Die US 2013/0006517 A1 beschreibt ein Verfahren zur Bereitstellung von Routen. Bei einer Navigationsanfrage von einem Punkt A zu einem Punkt B wird in einer Datenbank nach einer existierenden Route gesucht. Ist keine solche Route vorhanden, wird eine Route aus vorhandenen Teilrouten, die mit der gesuchten Route zumindest in Teilbereichen übereinstimmen, ermittelt.

Die US 2015/308848 A1 beschreibt ein Navigationssystem, bei dem gespeicherte Routendaten durch das Entfernen von Endbereichen anonymisiert werden.

Es ist somit Aufgabe der vorliegenden Erfindung ein Verfahren und eine Vorrichtung zu schaffen, die eine De-Anonymisierung von Routendaten verhindert oder zumindest erschwert und somit deren Verwendung zur Weiterverarbeitung ermöglicht.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zur Bereitstellung von aufgezeichneten, anonymisierten Routen, wobei eine Route eine räumliche Bewegung eines Objekts von einem Startpunkt über aufeinanderfolgende Wegpunkte zum einen Zielpunkt ist, die durch eine Positionsangabe für jeden Wegpunkt aufgezeichnet und durch Entfernen von Objekt-identifizierenden Daten anonymisiert ist, weist folgende Schritte auf:
Ein Erfassen von mehr als einer Route, wobei jede erfasste Route mindestens einen gemeinsamen Wegpunkt oder mindestens eine gemeinsame überlappende Teilroute aus benachbarten Wegpunkten mit mindestens einer anderen erfassten Route aufweist, ein Segmentieren jeder Route in mindestens zwei Teilrouten umfassend mindestens eine überlappende Teilroute oder einen gemeinsamen Wegpunkt, ein Speichern jeder einzelnen Teilroute jeder erfassten Route in jeweils einem einzigen Datensatz pro Teilroute und ein Ausgeben der erfassen Routen lediglich in Form der Teilrouten spezifischen Datensätze.

Dies hat den Vorteil, dass somit eine Zuordnung von Start- und Zielpunkt einer Route verhindert oder zumindest erheblich erschwert wird. Je mehr Routen mit einer überlappenden Wegstrecke über das Verfahren zusammengefasst werden, umso schwieriger wird es, die Teilrouten getrennten Start- und Endpunkte zuzuordnen. Dies ist insbesondere dann der Fall, wenn die überlappende Teilroute kurz in Relation zur Gesamtroute ist.

In einer vorteilhaften Ausführungsform werden überlappende Teilrouten von verschiedenen Routen in einem gemeinsamen Datensatz gespeichert.

Dadurch kann die Speicherkapazität zur Speicherung der erfassten Routen reduziert werden, da für überlappende Teilrouten lediglich einmal Positionsangaben gespeichert werden müssen.

In einer vorteilhaften Ausführungsform wird eine erfasste Route, die lediglich in einem Wegpunkt mit den anderen Routen übereinstimmt, an dem gemeinsamen Wegpunkt in zwei Teilrouten segmentiert. Dadurch kann die Anzahl von Routen, die durch das Verfahren zusammengefasst werden, vergrößert werden. Dadurch erhöht sich auch die Anzahl möglicher Kombinationen von Teilrouten, zur Rekonstruktion einer gesamten Route, sodass ein besserer Schutz vor einer De-Anonymisierung erreicht wird.

In einer vorteilhaften Ausführungsform wird eine erfasste Zeitangabe zu einer Route, einer Teilroute oder einem Wegpunkt gerundet oder durch die Angabe eines Zeitintervalls ersetzt und die Rundungsgenauigkeit bzw. die Breite des Zeitintervalls derart gewählt, dass eine vorgegebene Mindestanzahl von Routen, Teilrouten oder Wegpunkte in dem Zeitintervall erfasst sind.

Dies hat den Vorteil, dass eine Zuordnung zusammengehörender Teilrouten über die Zeitangaben der Teilrouten erschwert wird. Bei einer hinreichend genau erfassten Zeitangabe der Teilrouten könnten zusammengehörende benachbarte Teilrouten ermittelt und somit die Gesamtroute ermittelt werden.

In einer Variante werden die erfassten Zeitangaben einer Teilroute oder eines Wegpunkts gelöscht.

Somit kann die Gesamtroute nicht über eine Korrelation der Zeitangaben der Teilrouten oder Wegpunkte rekonstruiert werden.

In einer weiteren Variante werden erfasste Zeitangaben lediglich an Wegpunkten im Bereich von Segmentierungspunkten durch Angaben der Zeitintervalle ersetzt oder lediglich die Zeitangaben der Segmentierungspunkte gelöscht.

Ein Segmentierungspunkt ist dabei der Endpunkt einer Teilroute, an den eine benachbarte Teilroute anschließt. Eine Zuordnung benachbarter Teilrouten einer Gesamtroute durch Korrelation der Zeitangaben an den Segmentierungspunkten wird damit erschwert. In diesem Fall können insbesondere bei längeren Teilrouten auch genaue Zeitangaben für eine weitere Auswertung zur Verfügung gestellt werden.

In einer vorteilhaften Ausführungsform werden die Genauigkeit der Positionsangaben zu Wegpunkten im Bereich eines Segmentierungspunktes reduziert oder Wegpunkte im Bereich eines Segmentierungspunktes entfernt.

Auch hierdurch wird eine Zuordnung von Teilrouten zu einer aufgezeichneten Gesamtroute erschwert. Auch hier kann die Genauigkeit der Positionsangabe dynamisch an die Anzahl der Routen, die eine solche Teilroute umfassen, angepasst werden. Sind hinreichend viele Teilrouten mit Positionsangaben in einem engen räumlichen Bereich vorhanden, so kann die Genauigkeit der Positionsangabe erhöht werden. In Zeiten starken Verkehrs ist beispielsweise eine auf einige Sekunden genaue Zeitangabe oder eine auf wenige Meter genaue Positionsangabe noch möglich, in Zeiten schwachen Verkehrs muss möglicherweise die Zeitangabe auf ein Zeitintervall einer vollen Stunde beziehungsweise eine Positionsangabe auf mehrere Meter gerundet werden. Positions- oder auch Zeitangaben im Bereich eines Segmentierungspunktes, wie beispielsweise einer Kreuzung oder einer Einmündung von Straßen, sind aus den Routen zu entfernen, wenn die Route so genau erfasst wird, dass aus dem Anfang oder Ende einer Teilroute beispielsweise die Abbiegerichtung oder die gewählte Fahrspur erkennbar ist.

In einer vorteilhaften Ausführungsform wird eine Route mit einem Zwischenziel als zwei unabhängige Routen erfasst.

Dadurch kann die Anzahl von Routen mit einem überlappenden Bereich erhöht werden und tatsächliche Start- und Zielpunkte durch die fiktiven Start- und Zielpunkte von Zwischenzielen verschleiert werden.

In einer vorteilhaften Ausführungsform wird eine Route durch eine GPS-Ortung oder eine Funkzellenortung oder durch Kontakt zu einem Zugangspunkt eines Netzwerks oder durch Kontakt mit elektronischen Zahlungssystemen oder durch Kontakt mit Nahfeldkommunikations-Lesestellen aufgezeichnet.

Die erfindungsgemäße Vorrichtung zur Bereitstellung von aufgezeichneten anonymisierten Routen, wobei eine Route eine räumliche Bewegung eines Objekts von einem Startpunkt über aufeinanderfolgende Wegpunkte zu einem Zielpunkt ist, die durch eine Positionsangabe für jeden Wegpunkt aufgezeichnet und durch Entfernen von Objekt-identifizierenden Daten anonymisiert ist, umfasst eine Erfassungseinheit, die derart ausgebildet ist, mehr als eine Route zu erfassen, wobei jede erfasste Route mindestens einen gemeinsamen Wegpunkt oder mindestens eine gemeinsame überlappende Teilroute aus benachbarten Wegpunkten mit mindestens einer anderen erfassten Route aufweist, eine Segmentierungseinheit, die derart ausgebildet ist, jede Route in mindestens zwei Teilrouten umfassend mindestens eine überlappende Teilroute oder einen gemeinsamen Wegpunkt zu segmentieren, eine Speichereinheit, die derart ausgebildet ist, jede einzelne Teilroute aller erfassten Routen in jeweils einem Datensatz pro Teilroute zu speichern und eine Ausgabeeinheit, die derart ausgebildet ist, die erfassten Routen lediglich in Form von Teilrouten-spezifischen Datensätzen zur Auswertung und/oder Steuerung auszugeben.

In einer vorteilhaften Ausführungsform sind überlappende Teilrouten (R1.2, R2.2) von verschiedenen Routen in einem gemeinsamen Datensatz in der Speichereinheit gespeichert.

Die Vorrichtung enthält dabei mindestens einen Mikroprozessor, der die genannte Funktion bereitstellt. Jede der von der Erfassungseinheit erfassten Routen hat mit mindestens einer anderen erfassten Route eine Teilstrecke beziehungsweise Teilroute gemeinsam. Werden beispielsweise drei Routen erfasst, und alle drei Routen haben eine bestimmte Teilroute jeweils gemeinsam und besteht jede der drei erfassten Routen aus zwei weiteren Teilrouten, die jedoch nicht mit einer der anderen beiden Routen überlappen, so werden in der Speichereinheit sieben Datensätze angelegt, wobei ein Datensatz die Daten zu der überlappenden Teilroute gehörenden Wegpunkte aller drei erfassten Routen enthält und die jeweils sechs weiteren Datensätze jeweils Wegpunkte zu einer der weiteren Teilrouten der insgesamt drei Routen enthält.

In einer vorteilhaften Ausführungsform ist die Segmentierungseinheit derart ausgebildet eine erfasste Route, die lediglich in einem Wegpunkt mit den anderen Routen übereinstimmt, an dem gemeinsamen Wegpunkt in zwei Teilbereiche zu segmentieren.

Der gemeinsame Wegpunkt ist hier somit auch ein Segmentierungspunkt, der im Minimalfall eine Route in zwei Teilrouten teilt.

In einer Variante ist die Segmentierungseinheit derart ausgebildet, eine erfasste Zeitangabe zu einer Route, einer Teilroute oder einem Wegpunkt durch Runden oder durch die Angabe eines Zeitintervalls zu ersetzen und die Rundungsgenauigkeit bzw. Breite des Zeitintervalls derart einzurichten, dass eine vorgegebene Mindestanzahl an Routen, Teilrouten oder Wegpunkten im Zeitintervall erfasst sind.

In einer weiteren Variante ist die Segmentierungseinheit derart ausgebildet, eine erfasste Zeitangabe zu einer Route, einer Teilroute oder einem Wegpunkt zu löschen.

In einer Variante ist die Segmentierungseinheit derart ausgebildet, lediglich erfasste Zeitangaben zu Wegpunkten im Bereich der Segmentierungspunkte durch die Angaben der Zeitintervalle zu ersetzen oder zu löschen.

Dadurch wird die Korrelierbarkeit der Teilrouten verringert und zudem die Verarbeitungskapazität in der Segmentierungseinheit reduziert.

In einer Variante ist die Segmentierungseinheit derart ausgebildet, die Genauigkeit der Positionsangaben zu den Wegpunkten im Bereich eines Segmentierungspunktes zu reduzieren oder Wegpunkte im Bereich eines Segmentierungspunktes zu entfernen.

Damit kann erreicht werden, dass beispielsweise eine gewählte Abbiegespur oder Abbiegerichtung nicht mehr erkennbar ist und eine Zuordnung zur nächsten bzw. vorhergehenden Teilroute erschwert wird.

In einer Variante ist die Erfassungseinheit derart ausgebildet, eine Route mit einem Zwischenziel als zwei unabhängige Routen zu erfassen.

Es wird des Weiteren ein Computerprogrammprodukt beansprucht, das direkt in einen Mikroprozessor ladbar ist und Programmcodeteile umfasst, die dazu geeignet sind, die Schritte des Verfahrens durchzuführen.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Figur 1: eine erste beispielhafte Route, dargestellt auf einem Teil einer Straßenkarte;
- Figur 2: eine zweite beispielhafte Route, die eine Teilroute mit der ersten Route gemeinsam hat, dargestellt auf einem Teil einer Straßenkarte;
- Figur 3: die erste und zweite Route zerlegt in Teilrouten gemeinsam dargestellt auf einem Teil einer Straßenkarte;
- Figur 4: die zweite und eine dritte Route zerlegt in Teilrouten gemeinsam dargestellt auf einem Teil einer Straßenkarte; und
- Figur 5: ein Ausführungsbeispiel des erfindungsgemäßen Verfahrens als Ablaufdiagramm;
- Figur 6: ein Ausführungsbeispiel einer erfindungsgemäßen Vorrichtung in Blockdarstellung.

Einander entsprechende Teile sind in allen Figuren mit den gleichen Bezugszeichen versehen.

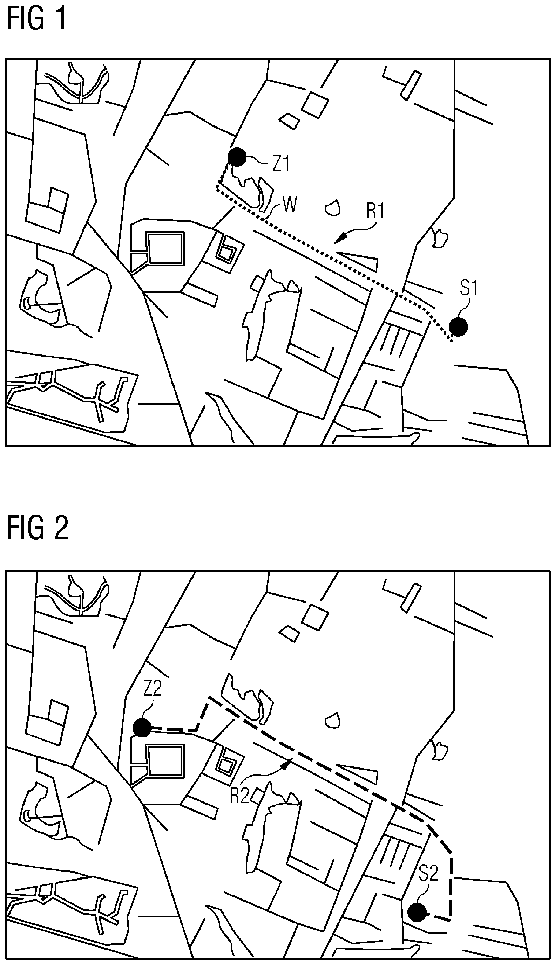

Figur 1 zeigt eine erste Route R1 von einem Startpunkt S1 zu einem Zielpunkt Z1. Die zurückgelegte Wegstrecke ist dabei gepunktet dargestellt. Die Punkte stellen beispielsweise Wegpunkte W dar, zu denen jeweils Positionsangaben und beispielsweise auch Zeitangaben oder Höhenangaben vorhanden sind. Zur Verwendung einer solchen Route R1 zur Weiterverarbeitung muss entweder die dem sich bewegenden Objekt zugeordnete Person eine qualifizierte, zweckbezogene Einwilligung zur Verwendung der Routendaten geben oder die Routendaten müssen so aufbereitet werden, dass Rückschlüsse auf das sich bewegende Objekt beziehungsweise den Benutzer unmöglich sind.

In Figur 2 ist eine zweite Route R2 mit einem Startpunkt S2 und einem Zielpunkt Z2 dargestellt, die jeweils verschieden von dem Startpunkt S1 und Z1 der ersten Route R1 sind. Die zwischen dem Startpunkt S2 und Zielpunkt Z2 zurückgelegte Route R2 ist in Figur 2 gestrichelt eingezeichnet.

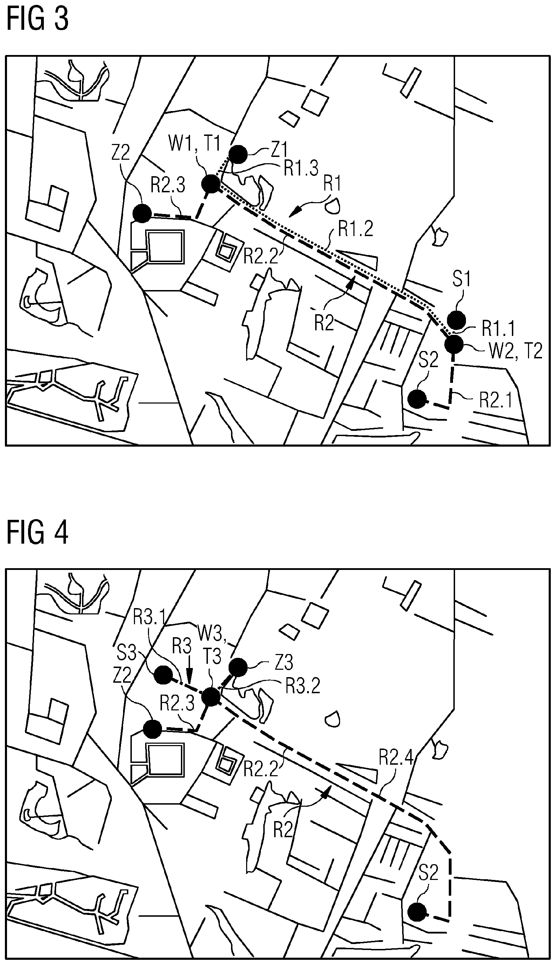

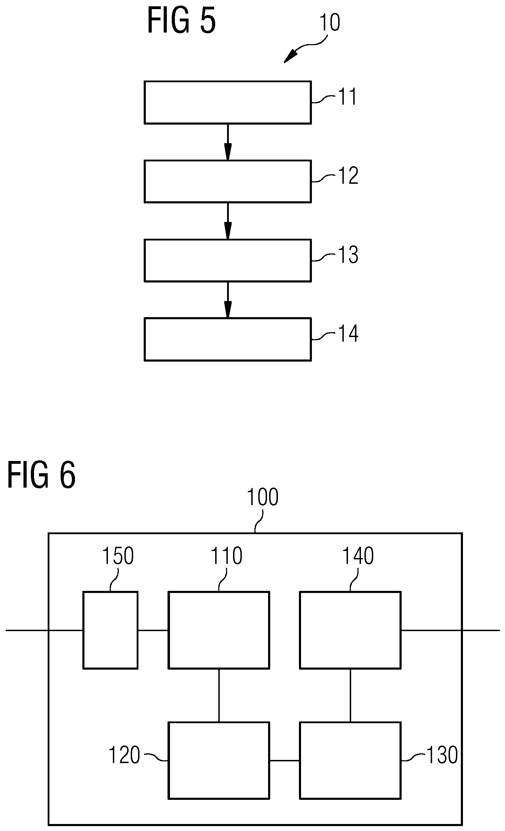

Figur 3 zeigt nun die erste und zweite Route R1, R2 gemeinsam in einer Karte eingezeichnet. Dabei ist eine überlappende Teilroute R1.2, R2.2 zwischen den Wegpunkten W1 und W2 erkennbar. Das erfindungsgemäßen Verfahren, dargestellt in Figur 5 wird nun am Beispiel der in Figur 3 dargestellten ersten und zweiten Route R1, R2 beschrieben.

In einem ersten Verfahrensschritt 11 werden die Routen R1 und R2 erfasst, da sie beide eine überlappende Teilroute R1.2, R2.2, die sich zwischen den Wegpunkten W1 und W2 erstreckt, umfassen. In einem zweiten Verfahrensschritt 12 werden beide Routen R1 und R2 nun jeweils an den zwei gleichen Wegpunkten W1 und W2, die auch als Segmentierungspunkte T1, T2 bezeichnet werden, in jeweils drei Teilrouten R1.1, R1.2, R1.3 bzw. Teilrouten R2.1, R2.2 und R2.3 zerlegt. Das mittlere Teilstück R1.2 und R2.2 haben beide Routen gemeinsam. Im Verfahrensschritt 13 werden nun die Daten der einzelnen Teilrouten in jeweils einem einzigen Datensatz pro unterschiedlich verlaufender Teilroute abgespeichert. Es werden somit fünf Datensätze erstellt. Die Teilroute R1.1 wird in einem ersten Datensatz abgelegt. Die Teilroute R2.1 wird in einem zweiten Datensatz abgelegt. Die Teilroute R1.2 und die Teilroute R2.2 werden beide zusammen in einem dritten Datensatz abgelegt. In einem vierten Datensatz wird die Teilroute R1.3 und in einem fünften Datensatz die Teilroute R2.3 abgespeichert. Es ist nicht mehr ersichtlich, ob sich das Objekt 1 beziehungsweise eine zugeordnete Person vom Startpunkt S1 zum Zielpunkt Z1 oder Z2 bewegt hat. In einem Verfahrensschritt 14 können nun die Routendaten aus den Teilrouten-spezifischen Datensätzen ausgelesen und weiterverarbeitet werden.

In Figur 4 ist ein weiteres Beispiel mit zwei erfasste Routen R2 und R3 dargestellt. Die Route R2 entspricht der in Figur 2 dargestellten Route, die Route R3 erstreckt sich von einem Startpunkt S3 zu einem Zielpunkt Z3 und hat mit der Route R2 lediglich einen Wegpunkt W3 gemeinsam. Dies kann beispielsweise eine Straßenkreuzung sein. Dieser gemeinsame Wegpunkt W3 dient als Segmentierungspunkt T3. Die überlappende Teilroute von Route R3 mit Route R2 besteht somit lediglich aus einem einzigen Wegpunkt. Es entstehen so vier Teilrouten. Eine Teilroute R2.4 erstreckt sich zwischen dem Startpunkt S2 und dem gemeinsamen Wegpunkt W3 der Route R2. Eine weitere Teilroute R2.3 erstreckt sich zwischen dem gemeinsamen Wegpunkt W3 und dem Zielpunkt Z2. Eine dritte Teilroute R3.1 erstreckt sich zwischen dem Startpunkt S3 und dem gemeinsamen Wegpunkt W3. Eine vierte Teilroute R3.2 erstreckt sich vom gemeinsamen Wegpunkt W3 bis zum Zielpunkt Z3. Jede dieser Teilrouten R2.3, R2.4, R3.1, R3.2 wird in jeweils einem Datensatz abgespeichert. Die Information zu den erfassten Routen wird auch hier lediglich in Form der Teilrouten-spezifischen Datensätze ausgegeben. Die Teilroute R2.4 kann alternativ auch in mehrere Teilrouten, beispielsweise R2.2 und R2.1 entsprechend Figur 3, zerlegt werden. Entsprechend werden dann fünf Datensätze erzeugt und zur Weiterverarbeitung ausgegeben.

Ein Segmentierungspunkt Ti ist somit ein Wegpunkt Wi, der einen Endpunkt einer Teilroute bildet und Element mindestens zweier unterschiedlicher Teilrouten ist. Als Segmentierungspunkte eignen sich beispielsweise Kreuzungen, Einmündungen oder Autobahnausfahrten im Individualverkehr. Bei öffentlichen Verkehrsmitteln eignen sich besonders Haltestellen oder Bahnhöfe, an denen ein Zu- und Abgang möglich ist. Um eine Zuordnung unterschiedlicher Teilrouten zu einer Gesamtroute zu verhindern beziehungsweise zu erschweren, müssen zusätzliche Daten wie Metadaten und Nutzeridentifikationen, beispielsweise eine Gerätekennung, eine Telefonnummer oder eine IP-Adresse, entfernt werden. Eine teilweise De-Anonymisierung durch Zuordnung von Start- und Zielpunkten einer Route wird umso schwerer, je mehr Routen mit überlappenden Teilrouten erfasst und zusammen segmentiert und abgespeichert werden.

Eine Zuordnung zusammengehörender Teilrouten kann auch über die Zeit erfolgen, wenn die Teilrouten hinreichen genau erfasst wurden. Daher werden erfasste Zeitangaben zu einer Route, einer Teilroute oder auch einzelnen Wegpunkten gerundet oder durch die Angabe eines Zeitintervalls ersetzt. Die Rundungsgenauigkeit bzw. Breite des Zeitintervalls und somit die Genauigkeit der Zeitangabe wird dabei derart gewählt, dass eine vorgegebene Mindestanzahl von Routen, Teilrouten oder Wegpunkte in dem Zeitintervall erfasst sind. Alternativ kann die erfasste Zeitangabe vollständig entfernt werden. Dies ist insbesondere in der Nähe der Segmentierungspunkte durchzuführen, da hier damit die benachbarte Teilroute zugeordnet werden kann. Eine ähnliche Zuordnung ist dann möglich, wenn Zeitangaben an oder in der Nähe der Segmentierungspunkte T1, T2 mit hoher Genauigkeit angegeben werden. Durch einen Vergleich der Zeitangaben von benachbarten Teilrouten könnte eine Zuordnung von Teilrouten ermöglicht und somit die gesamte Route ermittelt werden.

In Figur 6 ist eine erfindungsgemäße Vorrichtung 100 dargestellt, die die einzelnen Verfahrensschritte des Verfahrens 10 ausführt. Die Vorrichtung 100 umfasst eine Erfassungseinheit 110, eine Segmentierungseinheit 120, eine Speichereinheit 130 sowie eine Ausgabeeinheit 140. Optional umfasst die Vorrichtung 100 eine Anonymisierungseinheit 150, die Objektidentifizierende Daten vor der Weiterverarbeitung in der Erfassungseinheit 110 entfernt. Die Vorrichtung 100 mit den verschiedenen Einheiten besteht aus einem oder mehreren Mikroprozessoren, die die entsprechenden Aktionen ausführen. In der Erfassungseinheit 110 werden mehr als eine Route erfasst, wobei jede erfasste Route mindestens einen gemeinsamen Wegpunkt oder mindestens eine gemeinsame überlappende Teilroute aus benachbarten Wegpunkten mit mindestens einer anderen erfassten Route aufweist. Eine Teilroute kann dabei im Extremfall aus einem einzigen Wegpunkt gebildet sein, der dann als Segmentierungspunkt dient. Die von der Erfassungseinheit 110 ermittelten und erfassten Routen werden an die Segmentierungseinheit 120 weitergegeben. Die Segmentierungseinheit 120 segmentiert jede Route in mindestens zwei Teilrouten, wobei jede Teilroute mindestens einen gemeinsamen Wegpunkt als Segmentierungspunkt aufweist.

Die Daten zu jedem Wegpunkt werden nun in der Speichereinheit 130 in jeweils einem Datensatz pro Teilroute abgelegt. Besonders günstig ist es, wenn überlappende Teilrouten (R1.2, R2.2) von verschiedenen Routen in einem gemeinsamen Datensatz gespeichert sind. Die Speichereinheit 130 umfasst somit für jede Wegstrecke von einem ersten zu einem zweiten Segmentierungspunkt genau einen Datensatz. Dadurch kann auch die Teilroute im Nachhinein keiner bestimmten Route zugeordnet werden.

Die Ausgabeeinheit 140 gibt die Routendaten lediglich in Form eines, mehrerer oder aller Datensätze aus. Werden diese Daten in einer Nachverarbeitungsvorrichtung analysiert, so ist eine Korrelation der einzelnen Teilrouten zu einer vollständigen Route kaum möglich. Somit liegen keine datenschutzrechtlichen Bedenken zur Weiterverarbeitung vor.

Alle beschriebenen und/oder gezeigten Merkmale können im Rahmen der Verbindung vorteilhaft miteinander kombiniert werden. Die Erfindung ist nicht auf die beschriebenen Ausführungsbeispiele beschränkt.

## Patentansprüche

1. Verfahren zur Bereitstellung von aufgezeichneten anonymisierten Routen, wobei eine Route eine räumliche Bewegung eines Objekts von einem Startpunkt über aufeinanderfolgende Wegpunkte zu einem Zielpunkt ist, die durch eine Positionsangabe für jeden Wegpunkt aufgezeichnet und durch Entfernen von Objekt-identifizierenden Daten anonymisiert ist, mit den Schritten:
- Erfassen (11) von mehr als einer Route, wobei jede erfasste Route mindestens einen gemeinsamen Wegpunkt oder mindestens eine gemeinsame überlappende Teilroute aus benachbarten Wegpunkten mit mindestens einer anderen erfassten Route aufweist,
- Segmentieren (12) jeder Route in mindestens zwei Teilrouten umfassend mindestens eine überlappende Teilroute oder einen gemeinsamen Wegpunkt, und
- Speichern (13) jeder einzelnen Teilroute jeder erfassten Route in jeweils einem einzigen Datensatz pro Teilroute,
- Ausgeben (14) aller erfassten Routen gemeinsam in Form von Teilrouten-spezifischen Datensätzen.

2. Verfahren nach Anspruch 1, wobei überlappende Teilrouten von verschiedenen Routen in einem gemeinsamen Datensatz gespeichert werden.

3. Verfahren nach Anspruch 1 oder 2, wobei eine erfasste Route (R1, R3), die lediglich in einem Wegpunkt (W3) mit den anderen Routen übereinstimmt, an dem gemeinsamen Wegpunkt (W3) in zwei Teilrouten (R1.1, R1.2, R3.1, R3.2) segmentiert wird.

4. Verfahren nach einem der vorhergehenden Ansprüche, wobei eine erfasste Zeitangabe zu einer Route (R1, R2, R3), einer Teilroute (R1.1, R1.2, R3.1, R3.2) oder einem Wegpunkt (W) gerundet oder durch die Angabe eines Zeitintervalls ersetzt wird und die Rundungsgenauigkeit bzw. die Breite des Zeitintervalls derart gewählt wird, dass eine vorgegebene Mindestanzahl von Routen, Teilrouten oder Wegpunkten in dem Zeitintervall erfasst sind.

5. Verfahren nach einem der vorhergehenden Ansprüche, wobei die erfassten Zeitangaben einer Route (R1, R2, R3), einer Teilroute (R1.1, R1.2, R3.1, R3.2) oder einem Wegpunkt (W) gelöscht werden.

6. Verfahren nach Anspruch 4 oder 5, wobei die erfassten Zeitangaben lediglich an Wegpunkten (W1, W2, W3) im Bereich von Segmentierungspunkten (T1, T2, T3) einer Teilroute durch Angaben der Zeitintervalle ersetzt oder gelöscht werden.

7. Verfahren nach einem der vorhergehenden Ansprüche, wobei die Genauigkeit der Positionsangaben zu Wegpunkten im Bereich eines Segmentierungspunktes (T1, T2, T3) reduziert wird oder Wegpunkte (W1, W2, W3) im Bereich eines Segmentierungspunktes (T1, T2, T3) entfernt werden.

8. Verfahren nach einem der vorhergehenden Ansprüche, wobei eine Route mit einem Zwischenziel als zwei unabhängige Routen erfasst wird.

9. Verfahren nach einem der vorhergehenden Ansprüche, wobei eine Route durch eine GPS-Ortung oder eine Funkzellen-Ortung oder durch Kontakt zu einem Zugangspunkt eines Netzwerks oder durch Kontakt mit elektronischen Zahlungssystemen oder durch Kontakt mit Nahfeldkommunikations-Lesestellen aufgezeichnet wird.

10. Vorrichtung zur Bereitstellung von aufgezeichneten anonymisierten Routen, wobei eine Route eine räumliche Bewegung eines Objekts von einem Startpunkt über aufeinanderfolgende Wegpunkte zu einem Zielpunkt ist, die durch eine Positionsangabe für jeden Wegpunkt aufgezeichnet und durch Entfernen von Objekt-identifizierenden Daten anonymisiert ist, umfassend
- eine Erfassungseinheit (110), die dazu ausgebildet ist mehr als eine Route zu erfassen, wobei jede erfasste Route mindestens einen gemeinsamen Wegpunkt oder mindestens eine gemeinsame überlappende Teilroute aus benachbarten Wegpunkten mit mindestens einer anderen erfassten Route aufweist,
- eine Segmentierungseinheit (120), die dazu ausgebildet ist jede Route in mindestens zwei Teilrouten umfassend mindestens eine überlappende Teilroute oder einen gemeinsamen Wegpunkt zu segmentieren,
- eine Speichereinheit (130), die dazu ausgebildet ist jede einzelne Teilroute jeder erfassten Route in jeweils einem Datensatz pro Teilroute zu speichern, und
- eine Ausgabeeinheit (140), die dazu ausgebildet ist, die erfassten Routen lediglich in Form der Teilrouten-spezifischen Datensätzen zur Auswertung und/oder Steuerung auszugeben.

11. Vorrichtung nach Anspruch 10, wobei überlappende Teilrouten (R1.2, R2.2) von verschiedenen Routen in einem gemeinsamen Datensatz gespeichert sind.

12. Vorrichtung nach Anspruch 10, wobei die Segmentierungseinheit (120) dazu ausgebildet ist eine erfasste Route, die lediglich in einem Wegpunkt mit den anderen Routen übereinstimmt, an dem gemeinsamen Wegpunkt in zwei Teilbereiche zu segmentieren.

13. Vorrichtung nach einem der Ansprüche 10 bis 12, wobei die Segmentierungseinheit (120) dazu ausgebildet ist eine erfasste Zeitangabe zu einer Route, einer Teilroute oder einem Wegpunkt zu runden oder durch die Angabe eines Zeitintervalls zu ersetzen und die Rundungsgenauigkeit bzw. Breite des Zeitintervalls derart einzurichten, dass eine vorgegebene Mindestanzahl von Routen, Teilrouten oder Wegpunkten in dem Zeitintervall erfasst sind.

14. Vorrichtung nach einem der Ansprüche 10 bis 13, wobei die Segmentierungseinheit (120) dazu ausgebildet ist eine erfasste Zeitangabe zu einer Route, einer Teilroute oder einem Wegpunkt zu löschen.

15. Vorrichtung nach einem der Ansprüche 13 oder 14, wobei die Segmentierungseinheit (120) dazu ausgebildet ist, lediglich erfasste Zeitangaben zu Wegpunkten im Bereich eines Segmentierungspunktes durch Angabe der Zeitintervalle zu ersetzen oder zu löschen.

16. Vorrichtung nach einem der Ansprüche 10 bis 15, wobei die Segmentierungseinheit (120) dazu ausgebildet ist, die Genauigkeit der Positionsangaben zu Wegpunkten im Bereich eines Segmentierungspunktes zu reduzieren oder Wegpunkte im Bereich eines Segmentierungspunktes zu entfernen.

17. Vorrichtung nach einem der Ansprüche 10 bis 16, wobei die Erfassungseinheit (110) dazu ausgebildet ist, eine Route mit einem Zwischenziel als zwei unabhängige Routen zu erfassen.

18. Computerprogrammprodukt, das in einen Mikroprozessor ladbar ist, umfassend Programmcodeteile, die dazu ausgebildet sind, die Schritte des Verfahrens nach einem der Ansprüche 1 bis 9 durchzuführen.

## Claims

1. Method for providing recorded anonymized routes, wherein a route is a spatial movement of an object from a starting point to a destination point via successive waypoints, which movement is recorded by means of a position indication for each waypoint and is anonymized by removing object-identifying data, having the steps of:
- capturing (11) more than one route, wherein each captured route has at least one waypoint or at least one overlapping partial route of adjacent waypoints in common with at least one other captured route,
- segmenting (12) each route into at least two partial routes comprising at least one overlapping partial route or a common waypoint, and
- storing (13) each individual partial route of each captured route in a single data record for each partial route,
- outputting (14) all captured routes together in the form of partial-route-specific data records.

2. Method according to Claim 1, wherein overlapping partial routes of different routes are stored in a common data record.

3. Method according to Claim 1 or 2, wherein a captured route (R1, R3) which corresponds to the other routes only in one waypoint (W3) is segmented into two partial routes (R1.1, R1.2, R3.1, R3.2) at the common waypoint (W3).

4. Method according to one of the preceding claims, wherein a captured time indication for a route (R1, R2, R3), a partial route (R1.1, R1.2, R3.1, R3.2) or a waypoint (W) is rounded or is replaced with the indication of a time interval, and the rounding accuracy or the width of the time interval is selected in such a manner that a predefined minimum number of routes, partial routes or waypoints is captured in the time interval.

5. Method according to one of the preceding claims, wherein the captured time indications for a route (R1, R2, R3), a partial route (R1.1, R1.2, R3.1, R3.2) or a waypoint (W) are deleted.

6. Method according to Claim 4 or 5, wherein the captured time indications are replaced with indications of the time intervals or are deleted only at waypoints (W1, W2, W3) in the region of segmentation points (T1, T2, T3) of a partial route.

7. Method according to one of the preceding claims, wherein the accuracy of the position indications for waypoints in the region of a segmentation point (T1, T2, T3) is reduced, or waypoints (W1, W2, W3) in the region of a segmentation point (T1, T2, T3) are removed.

8. Method according to one of the preceding claims, wherein a route with an intermediate destination is captured as two independent routes.

9. Method according to one of the preceding claims, wherein a route is recorded by means of GPS positioning or radio cell positioning or by means of contact with an access point of a network or by means of contact with electronic payment systems or by means of contact with near-field communication reading locations.

10. Apparatus for providing recorded anonymized routes, wherein a route is a spatial movement of an object from a starting point to a destination point via successive waypoints, which movement is recorded by means of a position indication for each waypoint and is anonymized by removing object-identifying data, comprising
- a capture unit (110) which is designed to capture more than one route, wherein each captured route has at least one waypoint or at least one overlapping partial route of adjacent waypoints in common with at least one other captured route,
- a segmentation unit (120) which is designed to segment each route into at least two partial routes comprising at least one overlapping partial route or a common waypoint,
- a storage unit (130) which is designed to store each individual partial route of each captured route in a single data record for each partial route, and
- an output unit (140) which is designed to output the captured routes only in the form of the partial-route-specific data records for evaluation and/or control.

11. Apparatus according to Claim 10, wherein overlapping partial routes (R1.2, R2.2) of different routes are stored in a common data record.

12. Apparatus according to Claim 10, wherein the segmentation unit (120) is designed to segment a captured route, which corresponds to the other routes only in one waypoint, into two partial regions at the common waypoint.

13. Apparatus according to one of Claims 10 to 12, wherein the segmentation unit (120) is designed to round a captured time indication for a route, a partial route or a waypoint or to replace it with the indication of a time interval and to set up the rounding accuracy or width of the time interval in such a manner that a predefined minimum number of routes, partial routes or waypoints is captured in the time interval.

14. Apparatus according to one of Claims 10 to 13, wherein the segmentation unit (120) is designed to delete a captured time indication for a route, a partial route or a waypoint.

15. Apparatus according to either of Claims 13 and 14, wherein the segmentation unit (120) is designed to replace only captured time indications for waypoints in the region of a segmentation point with an indication of the time intervals or to delete them.

16. Apparatus according to one of Claims 10 to 15, wherein the segmentation unit (120) is designed to reduce the accuracy of the position indications for waypoints in the region of a segmentation point or to remove waypoints in the region of a segmentation point.

17. Apparatus according to one of Claims 10 to 16, wherein the capture unit (110) is designed to capture a route with an intermediate destination as two independent routes.

18. Computer program product which can be loaded into a microprocessor, comprising program code parts which are designed to carry out the steps of the method according to one of Claims 1 to 9.

## Revendications

1. Procédé de fourniture de routes anonymisées enregistrées, dans lequel une route est un déplacement spatial d'un objet d'un point de départ à des points de cheminement successifs vers un point de destination enregistrée par une indication de position pour chaque point de cheminement et anonymisé en retirant des données d'identification d'objet, comprenant les étapes de :
- détection (11) de plus d'une route, dans laquelle chaque route détectée a au moins un point de cheminement commun ou au moins une route partielle se chevauchant commune à partir de points de cheminement adjacents ayant au moins une autre route détectée,
- segmentation (12) de chaque route en au moins deux routes partielles comprenant au moins une route partielle se chevauchant ou un point de cheminement commun, et
- stockage (13) de chaque route partielle individuelle de chaque route détectée dans un seul enregistrement par route partielle,
- sortie (14) de toutes les routes détectées ensemble sous la forme d'enregistrements spécifiques à une route partielle.

2. Procédé selon la revendication 1, dans lequel des routes partielles se chevauchant de différentes routes sont stockées dans un enregistrement commun.

3. Procédé selon la revendication 1 ou 2, dans lequel une route détectée (RI, R3), qui coïncide avec les autres routes seulement dans un point de cheminement (W3), est segmentée au point de cheminement commun (W3) en deux routes partielles (R1.1, R1.2, R3.1, R3.2).

4. Procédé selon l'une des revendications précédentes, dans lequel un temps détecté pour une route (R1, R2, R3), d'une route partielle (R1.1, R1.2, R3.1, R3.2) ou d'un point de cheminement (W) est arrondi ou remplacé par l'indication d'un intervalle de temps et la précision d'arrondi ou la largeur de l'intervalle de temps est sélectionnée de sorte qu'un nombre minimal prédéterminé de routes, de routes partielles ou de points de cheminement soient détectés dans l'intervalle de temps.

5. Procédé selon l'une des revendications précédentes, dans lequel les temps détectés d'une route (R1, R2, R3), d'une route partielle (R1.1, R1.2, R3.1, R3.2) ou d'un point de cheminement (W) sont supprimés.

6. Procédé selon la revendication 4 ou 5, dans lequel les temps détectés sont remplacés ou supprimés uniquement aux points de cheminement (W1, W2, W3) dans la plage des points de segmentation (T1, T2, T3) d'une route partielle en spécifiant les intervalles de temps.

7. Procédé selon l'une des revendications précédentes, dans lequel la précision des indications de position par rapport aux points de cheminement dans la plage d'un point de segmentation (T1, T2, T3) est réduite ou les points de cheminement (W1, W2, W3) dans la plage d'un point de segmentation (T1, T2, T3) sont retirés.

8. Procédé selon l'une des revendications précédentes, dans lequel une route est détectée avec une destination intermédiaire sous la forme de deux routes indépendantes.

9. Procédé selon l'une des revendications précédentes, dans lequel une route est enregistrée par un emplacement GPS ou un emplacement de cellule ou par contact avec un point d'accès d'un réseau ou par contact avec des systèmes de paiement électroniques ou par contact avec des emplacements de lecture de communication en champ proche.

10. Dispositif de fourniture de routes anonymisées enregistrées, dans lequel une route est un déplacement spatial d'un objet d'un point de départ à des points de cheminement successifs vers un point de destination, enregistrée par une indication de position pour chaque point de cheminement et anonymisé en retirant des données d'identification d'objet, comprenant :
- une unité de détection (110) conçue pour détecter plus d'une route, dans laquelle chaque route détectée a au moins un point de cheminement commun ou au moins une route partielle se chevauchant commune à partir de points de cheminement adjacents avec au moins une autre route détectée,
- une unité de segmentation (120) conçue pour segmenter chaque route en au moins deux routes partielles comprenant au moins une route partielle se chevauchant ou un point de cheminement commun,
- une unité de mémoire (130) conçue pour stocker chaque route partielle individuelle de chaque route détectée dans un enregistrement par route partielle, et
- une unité de sortie (140) conçue pour sortir les routes détectées uniquement sous la forme d'enregistrements spécifiques à une route partielle pour évaluation et/ou contrôle.

11. Dispositif selon la revendication 10, dans lequel des routes partielles se chevauchant (R1.2, R2.2) de différentes routes sont stockées dans un enregistrement commun.

12. Dispositif selon la revendication 10, dans lequel l'unité de segmentation (120) est conçue pour segmenter une route détectée qui coïncide avec les autres routes seulement dans un point de cheminement, au point de cheminement commun en deux sections.

13. Dispositif selon l'une des revendications 10 à 12, dans lequel l'unité de segmentation (120) est conçue pour arrondir un temps détecté pour une route, une route partielle ou un point de cheminement ou pour le remplacer par l'indication d'un intervalle de temps et établir la précision d'arrondi ou la largeur de l'intervalle de temps de sorte qu'un nombre minimal prédéterminé de routes, de routes partielles ou de points de cheminement soit détecté dans l'intervalle de temps.

14. Dispositif selon l'une des revendications 10 à 13, dans lequel l'unité de segmentation (120) est conçue pour supprimer un temps détecté pour une route, une route partielle ou un point de cheminement.

15. Dispositif selon l'une des revendications 13 ou 14, dans lequel l'unité de segmentation (120) est conçue pour remplacer ou supprimer uniquement les temps détectés pour des points de cheminement dans la plage d'un point de segmentation en spécifiant les intervalles de temps.

16. Dispositif selon l'une des revendications 10 à 15, dans lequel l'unité de segmentation (120) est conçue pour réduire la précision des indications de position aux points de cheminement dans la plage d'un point de segmentation ou pour retirer des points de cheminement dans la plage d'un point de segmentation.

17. Dispositif selon l'une des revendications 10 à 16, dans lequel l'unité de détection (110) est conçue pour détecter une route ayant une destination intermédiaire sous la forme de deux routes indépendantes.

18. Produit de programme informatique pouvant être chargé dans un microprocesseur comprenant des parties de code de programme conçues pour effectuer les étapes du procédé selon l'une des revendications 1 à 9.
